# EUROPÄISCHE PATENTSCHRIFT

(11) **EP 4 463 671 B1**
(45) Veröffentlichungstag und Bekanntmachung des Hinweises auf die Patenterteilung: **10.12.2025**
(21) Anmeldenummer: 23700668.9
(22) Anmeldetag: 10.01.2023
(51) Int. Cl.: F41H 5/04

(54) **PANZERUNGSPLATTE, PANZERUNGSPLATTENVERBUND UND PANZERUNG**
ARMOR PLATE, ARMOR PLATE ASSEMBLY AND ARMOR
PLAQUE DE BLINDAGE, ENSEMBLE PLAQUE DE BLINDAGE ET BLINDAGE

(30) Priorität: 12.01.2022 DE 102022100599
(43) Veröffentlichungstag der Anmeldung: 20.11.2024
(73) Patentinhaber: KENNAMETAL INC., Latrobe, PA 15650 (US)
(72) Erfinder: PARLOW, Werner, Latrobe, Pennsylvania 15650 (US); THEUERKAUF, Thomas, Latrobe, Pennsylvania 15650 (US); WOLF, Manfred, Latrobe, Pennsylvania 15650 (US); HELLDOERFER, Armin, Latrobe, Pennsylvania 15650 (US)
(74) Vertreter: Prinz & Partner mbB
(86) Internationale Anmeldenummer: PCT/EP2023/050417
(87) Internationale Veröffentlichungsnummer: WO 2023/135119

(56) Entgegenhaltungen:
- CN-A- 103 589 929
- DE-A1- 1 952 759
- US-A- 5 443 917
- US-A1- 2014 076 140
- US-A1- 2015 253 114
- US-A1- 2017 299 345

## Beschreibung

Die Erfindung betrifft eine Panzerungsplatte (sogenannter Add-on Armor), einen Panzerungsplattenverbund sowie eine Panzerung, mit der Gegenstände, insbesondere Fahrzeuge und mobile Einheiten, gegen die Wirkung von Beschuss mit Projektilen, Granaten oder ähnlichem geschützt werden können.

Aus dem Stand der Technik sind verschiedene Ansätze bekannt, um die Beschussfestigkeit zu erhöhen. Beispielsweise sind zusätzlich zu befestigende Panzerungsplatten bekannt, die aus Keramik bestehen, beispielsweise aus Siliciumcarbid (SiC).

Eine Herausforderung bei der Entwicklung von Panzerungen besteht darin, dass ein Kompromiss zwischen erzielbarer Schutzwirkung, Gewicht, Gesamtvolumen und Kosten gefunden werden muss.

Die Schutzwirkung von Panzerungen kann anhand von standardisierten Richtlinien miteinander verglichen werden. Beispielsweise werden in der STANAG (Standardization Agreement) 4569 die Schutzstufen für Insassen von Logistik- und leichten Panzerfahrzeugen geregelt.

Aus der DE 10 2017 116 319 sind Panzerungsplatten bekannt, die aus einem Material bestehen, das als wesentlichen Bestandteil Wolfram-Schwermetall oder Wolframcarbid enthält. Derartige Panzerungsplatten besitzen aufgrund ihrer hohen Dichte ein hohes Gesamtgewicht, um eine ausreichend hohe Schutzwirkung zu gewährleisten.

Die DE 10 2019 116 153 A1 beschreibt Panzerungsplatten mit einer Dicke von mindestens 3 mm und einer Kantenlänge von mindestens 20 mm, wobei die jeweilige Panzerungsplatte aus einem Material besteht, das größtenteils gebildet ist aus einer Komponente ausgewählt aus der Gruppe Hartmetall, Cermet und/oder Kombinationen davon. Es hat sich jedoch gezeigt, dass derartige Panzerungsplatten nicht zwangsläufig eine geeignete Kombination erforderlicher mechanischer Eigenschaften aufweisen. Insbesondere muss für viele Einsatzzwecke auf Multikomponenten-Cermets zurückgegriffen werden, um eine ausreichende Schutzwirkung zu erreichen, wodurch die Kosten der Panzerungsplatten hoch sind.

Die US 2014/0076140 A1 beschreibt eine Panzerungsplatte, die eine Schicht aufweist, die wiederum aus einem Hartmetall in Form von in einer Metallbinderphase eingebetteten Metallcarbidteilchen besteht, wobei das Hartmetall eine Bruchzähigkeit im Bereich von 7 bis 20 MPam^{1/2} aufweist und eine Dichte im Bereich von 5,5 bis 15,5 g/cm³ aufweisen können soll.

Die US 2015/0253114 A1 offenbart eine Panzerung mit einer Vielzahl an Scheiben oder Platten, die ein keramisches Material umfassen können. Die Scheiben oder Platten sind von einem Polymer umhüllt, das wiederum von einer Titanumhüllung umgeben sein kann.

Aus der US 2017/0299345 A1 ist eine mehrlagige Körperpanzerung bekannt, die unter anderem eine Panzerungsschicht aus miteinander verbundenen harten keramischen Panzerungsplatten enthält.

Die DE 19 52 759 A1 beschreibt Plättchen für eine Panzerung mit einem verhältnismäßig zerbrechlichen Werkstoff als Außenbelag und einer inneren Auflageschale aus einem verformbaren, jedoch zähen Werkstoff wie einer Leichtmetalllegierung. Als Werkstoff für den Außenbelag werden extraharter Stahl und metallkeramische oder keramische Verbindungen vorgeschlagen.

Die US 5 443 917 A offenbart ein Panzerungsmaterial, das im Wesentlichen aus einer gesinterten Mischung basierend auf Titannitrid, Titandiborid und Aluminiumnitrid besteht, optional in einer Mischung mit Siliziumnitrid oder Zirkonoxid, wobei das Material eine theoretische Dichte von mehr als 98 %, einen Elastizitätsmodul von mehr als 300 GPa und eine Druckfestigkeit von weniger als 5,5 GPa aufweist.

Die Aufgabe der Erfindung besteht darin, Panzerungsplatten sowie eine Panzerung mit ausreichender Beschussbeständigkeit bereitzustellen. Insbesondere sollen die Panzerungsplatten sowie die Panzerung kostengünstig herzustellen sein.

Die Aufgabe der Erfindung wird gelöst durch eine Panzerungsplatte, bestehend aus einem Material umfassend einen Cermet, wobei die Panzerungsplatte eine Dichte im Bereich von 5,0 bis 6,5 g/cm³ aufweist, insbesondere eine Dichte im Bereich von 5,0 bis 6,3 g/cm³. Der Cermet umfasst als Hauptkomponente einen titanbasierten Hartstoff, der aus der Gruppe TiC, TiCN und Kombinationen davon ausgewählt ist. Das Material der Panzerungsplatte weist einen Gehalt an titanbasiertem Hartstoff im Bereich von 60 bis 95 Gewichtsprozent auf, bezogen auf das Gesamtgewicht des Materials.

Cermets zeichnen sich durch eine hohe Härte und im Vergleich zu Hartmetallen geringeren Dichte aus, die jedoch ausreichend hoch ist, um eine zuverlässige Schutzwirkung gegen Beschuss bereitstellen zu können.

Insbesondere im Vergleich zu Panzerungsplatten aus keramischen Material wie Siliciumcarbid können die erfindungsgemäßen Panzerungsplatten bei vergleichbarem Gesamtgewicht eine bis zu 50% reduzierte Gesamtdicke aufweisen, während zugleich eine gleichwertige Beschussfestigkeit erzielt wird.

Es wurde insbesondere erkannt, dass Panzerungsplatten mit einer Dichte im Bereich von 5,0 bis 6,5 g/cm³, insbesondere im Bereich von 5,0 bis 6,3 g/cm³, einerseits bei üblichen Abmessungen der Panzerungsplatte ein so hohes Eigengewicht aufweisen, dass eine zuverlässige Schutzwirkung gegen Beschuss erzielt wird, andererseits jedoch kein übermäßig hohes Gesamtgewicht haben, welches sich nachteilig auf das zu schützende Objekt beziehungsweise die zu schützende Person auswirken kann.

Bevorzugt besteht das Material aus dem Cermet. Anders ausgedrückt besteht die Panzerungsplatte bevorzugt aus dem Cermet. Auf diese Weise ist die Herstellung der Panzerungsplatte noch weiter vereinfacht. Zudem kann das Gesamtgewicht der Panzerungsplatte im Vergleich zu im Stand der Technik bekannten Panzerungsplatten umfassend oder bestehend aus Hartmetall erheblich reduziert werden.

Um die Materialeigenschaften weiter maßzuschneidern, kann der Cermet zusätzlich zum titanbasierten Hartstoff wenigstens einen weiteren Hartstoff umfassen, der ausgewählt ist aus den Carbiden von Wolfram, Molybdän und Mischungen davon.

Der weitere Hartstoff ist bevorzugt in einem Anteil von bis zu 30 Gewichtsprozent im Material der Panzerungsplatte enthalten, bezogen auf das Gesamtgewicht des Materials, insbesondere von 1 bis 30 Gewichtsprozent, besonders bevorzugt im Bereich von 8,5 bis 25 Gewichtsprozent.

Um die Kosten der Panzerungsplatte und den Aufwand in deren Herstellung möglichst gering zu halten, ist der Cermet bevorzugt frei von Carbiden, Nitriden und Carbonitriden von Tantal und/oder Niob. Es hat sich gezeigt, dass sich auch ohne diese Elemente eine ausreichende Beschussbeständigkeit erzielen lässt, sofern die sonstigen mechanischen und/oder physikalischen Eigenschaften der Panzerungsplatte optimiert sind.

Mit anderen Worten handelt es sich bei dem Cermet des Materials der Panzerungsplatte insbesondere nicht um einen Multikomponenten-Cermet oder einen Vielkomponenten-Cermet.

Der Cermet kann einen Binder umfassen, wobei der Binder zusammengesetzt ist aus den Elementen ausgewählt aus der Gruppe Kobalt, Nickel, Kupfer, Eisen und Mischungen davon, bevorzugt ausgewählt aus der Gruppe Kobalt, Nickel und Mischungen davon.

Besonders bevorzugt besteht der Binder, abgesehen von unvermeidlichen Verunreinigungen, aus Nickel.

Der Binder ist bevorzugt in einem Anteil von 1 bis 20 Gewichtsprozent im Material der Panzerungsplatte enthalten, bezogen auf das Gesamtgewicht des Materials, besonders bevorzugt von 3 bis 15 Gewichtsprozent.

Je weniger Binder im Material der Panzerungsplatte enthalten ist, desto mehr gleichen sich die Eigenschaften der Panzerungsplatte keramischen Werkstoffen an. Mit anderen Worten werden mit sinkendem Binderanteil sprödere, aber auch härtere Panzerungsplatten erhalten.

Je mehr Binder im Material der Panzerungsplatten enthalten ist, desto mehr gleichen sich die Eigenschaften der Panzerungsplatte einem metallischen Werkstoff an. Mit anderen Worten zeichnen sich derartige Materialien insbesondere durch eine erhöhte Zähigkeit aus.

In einer Variante besteht das Material der Panzerungsplatte aus folgenden Bestandteilen: 65 bis 95 Gewichtsprozent des titanbasierten Hartstoffs ausgewählt aus der Gruppe TiC, TiCN und Kombinationen davon, bis zu 30 Gewichtsprozent, insbesondere 1 bis 30 Gewichtsprozent, des weiteren Hartstoffs ausgewählt aus der Gruppe bestehend aus den Carbiden von Wolfram, Molybdän und Mischungen davon, und 1 bis 20 Gewichtsprozent Nickel als Binder, jeweils bezogen auf das Gesamtgewicht des Materials.

Das Material der Panzerungsplatte weist insbesondere eine Druckfestigkeit im Bereich von 4400 bis 5800 MPa auf, bevorzugt im Bereich von 4600 bis 5700 MPa. Panzerungsplatten aus einem solchen Material weisen eine hervorragende Widerstandsfähigkeit gegen Druckspannungen auf, ohne sich übermäßig spröde zu verhalten.

Die Druckfestigkeit kann angelehnt an die ASTM E9-89a und die DIN ISO 4506 bestimmt sein, wie nachfolgend erläutert.

Zunächst wird eine Testprobe erzeugt, wobei ein Granulat umfassend die Komponenten des Materials in einer Gesenkpresse für zylindrische Proben zum Einsatz kommt und ein Zylinder mit Schleifaufmaß nach dem Sintern erzeugt wird. Das Sintern erfolgt in einem Sinter-HIP-Ofen. Der erhaltene Zylinder wird auf einen Außendurchmesser von 6,00 ± 0,05 mm und eine Oberfächenrauheit Rₐ von unter 0,8 µm spitzenlos geschliffen. Die Stirnflächen des Zylinders werden beidseitig planparallel flachgeschliffen auf eine Länge von 12,00 ± 0,05, wobei ebenfalls eine Oberfächenrauheit Rₐ von unter 0,8 µm erzeugt wird. Es wird keine Fase angebracht.

Der Drucktest wird im Zentrum der eingesetzten Druckplatten durchgeführt. Als Auflage werden zwei Hartmetallplatten mit einer polierten Oberfläche einer Rauheit von 3 µm verwendet, wobei die Hartmetallplatten eine Härte nach Vickers (HV30) von 1600 oder mehr, eine Dicke von mindestens 15 mm und einen Durchmesser von 40 mm aufweisen.

Die beiden Stirnflächen des Zylinders werden mit einem Fettungsmittel versehen, beispielsweise Vaseline. Zusätzlich werden zwischen Probe und Auflage beidseitig eine Stahlbandfolie mit einer Dicke von 0,05 mm untergelegt. Die Stahlbandfolie muss nach jeder Messung getauscht werden. Die Belastungsgeschwindigkeit bis zum Bruch beträgt 5,75 N/mm²s oder weniger. Während der Prüfung wird der Messverlauf graphisch aufgezeichnet, wobei für die Bestimmung der Druckfestigkeit die maximale Kraft herangezogen wird.

Um einen ausreichenden Widerstand gegen mechanisches Eindringen in die Panzerungsplatte bereitzustellen, kann diese eine Härte nach Vickers (HV30) im Bereich von 1000 bis 2000 aufweisen, bevorzugt im Bereich von 1300 bis 1900.

Die Härte nach Vickers kann nach DIN EN ISO 6507-1:2018-07 bestimmt sein.

Die Panzerungsplatte weist insbesondere eine Bruchzähigkeit nach Palmqvist K_{1c} im Bereich von 6 bis 12 MNm^{-3/2} auf, bevorzugt im Bereich von 6,5 bis 10,5 MNm^{-3/2}. Somit weist die Panzerungsplatte insbesondere eine Bruchzähigkeit oberhalb üblicher keramischer Materialien auf, wie sie in Panzerungsplatten zum Einsatz kommen, sodass eine geringere Neigung zur Ausbreitung von Rissen im Material vorhanden ist.

Die Bruchzähigkeit nach Palmqvist kann nach ISO 28079:2009 bestimmt sein.

Um eine weiter verbesserte Widerstandsfähigkeit gegen Verformungen zu gewährleisten, kann die Panzerungsplatte eine Biegebruchfestigkeit im Bereich von 750 bis 2000 MPa aufweisen, bevorzugt im Bereich von 1050 bis 1950 MPa.

Die Biegebruchfestigkeit kann nach DIN EN ISO 3327:2009 bestimmt sein.

Bevorzugt weist die Panzerungsplatte mehr als eine der zuvor genannten mechanischen Eigenschaften in den zuvor genannten Bereichen auf, besonders bevorzugt alle der zuvor genannten mechanischen Eigenschaften.

Die Panzerungsplatte kann eine Dicke von 3,0 mm oder mehr haben, beispielsweise 5,0 mm oder mehr. In einer weiteren Variante hat die Panzerungsplatte eine Dicke von 7,5 mm oder mehr.

Um das Gesamtgewicht der Panzerungsplatte zu begrenzen, hat diese in einer Variante bevorzugt eine Dicke im Bereich von 3,0 bis 8,0 mm, besonders bevorzugt von 3,5 bis 7,0 mm.

Die Abmessungen einer einzelnen Panzerungsplatte sind vorzugsweise vergleichsweise klein. Beispielsweise weist die Panzerungsplatte eine Kantenlänge von 5,0 mm oder mehr auf, bevorzugt von 10,0 mm oder mehr.

Als Kompromiss zwischen einerseits einer guten Herstellbarkeit und andererseits einem nicht ausufernden Aufwand bei der Anbringung der einzelnen Platten haben sich Kantenlängen im Bereich 10 bis 150 mm als vorteilhaft herausgestellt, insbesondere im Bereich 20 bis 100 mm oder 20 bis 50 mm.

Die Panzerungsplatten können jedwede Geometrie aufweisen, die geeignet ist, um mit mehreren nebeneinander angeordneten Panzerungsplatten eine darunterliegende Fläche vollständig abzudecken, abgesehen von Fugen zwischen den benachbarten Panzerungsplatten.

So können die Panzerungsplatten insbesondere eine hexagonale, dreieckige, quadratische oder rechteckige Form haben.

Bevorzugt haben die Panzerungsplatten eine hexagonale Form.

In einer bevorzugten Variante ist eine Oberseite der Panzerungsplatte sandgestrahlt. Es wurde erkannt, dass während des Sinterns der Panzerungsplatten der Binder an die Oberfläche des zu sinternden Grünlings wandert, wodurch an der Oberfläche eine mit Binder angereicherte und unterhalb der Oberfläche eine mit Binder verarmte Zone entsteht, welche eine Dicke von etwa 20 bis 30 µm aufweisen kann. Indem die Oberseite der Panzerungsplatte sandgestrahlt ist, kann die mit Binder angereicherte Zone mindestens teilweise, bevorzugt vollständig, abgetragen werden. Auf diese Weise kann die mechanische Stabilität der Panzerungsplatte weiter erhöht werden.

Auf diese Weise kann die Panzerungsplatte eine Gradientenstruktur aufweisen, in welcher nach dem Sandstrahlen die mit Binder verarmte Zone an der Oberfläche der Panzerungsplatte verbleibt.

Optional kann zusätzlich die mit Binder verarmte Zone ebenfalls abgetragen werden.

Die Oberseite der Panzerungsplatte ist insbesondere diejenige Fläche der Panzerungsplatte, welche in Einbauposition der Panzerungsplatte am wahrscheinlichsten einem Beschuss ausgesetzt ist. Anders ausgedrückt bildet die Oberseite der Panzerungsplatte eine Außenseite.

Die sandgestrahlte Oberseite kann auch eingesetzt werden, um die Panzerungsplatte an einem Substrat zu verkleben, beispielsweise an einem Träger oder einer weiteren Panzerungsplatte. Durch die Rauheit der Oberfläche, deren Größe über das Sandstrahlen wie im Stand der Technik bekannt eingestellt werden kann, kann eine besonders gute Klebstoffhaftung und somit eine besonders stabile Verbindung der Panzerungsplatte mit dem Substrat erzielt werden.

Die Panzerungsplatte kann auch an mehr als einer Seitenfläche sandgestrahlt sein, beispielsweise an der Oberseite und an einer der Oberseite entgegengesetzten Unterseite.

Erfindungsgemäß ist zur Lösung der oben genannten Aufgabe auch ein Panzerungsplattenverbund vorgesehen, umfassend zumindest zwei Schichten aus Panzerungsplatten der oben genannten Art, die miteinander verbunden sind.

Die Schichten aus Panzerungsplatten können Panzerungsplatten aus verschiedenen oder aus dem gleichen Material aufweisen. Auf diese Weise lassen sich in Sandwich-Bauweise maßgeschneiderte Panzerungsplattenverbunde realisieren.

Die Panzerungsplatten der Schichten können sowohl gleiche als auch unterschiedliche Dicken, Kantenlängen und/oder Querschnitte aufweisen.

In einer Variante sind die einzelnen Panzerungsplatten der verschiedenen Schichten deckungsgleich aufeinander aufgebracht. Dadurch lässt sich der Panzerungsplattenverbund als Ganzes auf einfache Art und Weise austauschen.

In einer alternativen Variante liegen die Panzerungsplatten der Schichten versetzt zueinander vor. Dadurch wird gewährleistet, dass in einer Panzerung, die aus den Panzerplattenverbunden zusammengesetzt ist, keine durchgehenden Fugen zwischen den Panzerungsplatten freiliegen. Somit wird verhindert, dass in einer Panzerung, die einen solchen Panzerungsplattenverbund aufweist, weniger stabile Bereiche entstehen.

Die einzelnen Schichten des Panzerungsplattenverbundes können insbesondere durch Verkleben, Sintern, Verschrauben und/oder Löten miteinander verbunden sein.

Als Klebstoff kann ein Klebstoff auf Silikonbasis dienen.

Als Lot sollte ein Hartlot verwendet werden, um eine ausreichend stabile Verbindung gewährleisten zu können.

Weiterhin wird die Aufgabe erfindungsgemäß gelöst durch eine Panzerung mit einem Träger, einer Panzerungsschicht und einer Klebstoffschicht, mittels der die Panzerungsschicht mit dem Träger verbunden ist, wobei die Panzerungsschicht aus mehreren Panzerungsplatten und/oder Panzerungsplattenverbunden der vorstehend genannten Art gebildet ist.

Die Panzerungsschicht kann Panzerungsplatten und/oder Panzerungsplattenverbunde aus unterschiedlichen Materialien enthalten.

So können die nebeneinander angeordneten Panzerungsplatten, die auf dem Träger aufgebracht sind, aus den gleichen und/oder aus verschiedenen Materialien gebildet sein.

Ebenso können die mehreren Panzerungsplattenverbunde der Panzerung, die auf dem Träger aufgebracht sind, jeweils aus der gleichen Abfolge von Schichten aus Panzerungsplatten bestehen oder eine unterschiedliche Abfolge von Schichten aus Panzerungsplatten aus verschiedenen Materialien aufweisen.

Die Spaltbreiten der Fugen zwischen den Panzerungsplatten und/oder den Panzerungsplattenverbunden können in einem Bereich von 0,01 bis 0,8 mm liegen. Bei größeren Spaltbreiten wird keine ausreichende Schutzwirkung der Panzerung erreicht. Auch kann eine unregelmäßige Spaltbreite dazu führen, dass die unter den Panzerungsplatten und/oder den Panzerungsplattenverbunden angeordnete Fläche nicht vollständig abgedeckt werden kann. Kleinere Spaltbreiten hingegen lassen sich nur mit großem Aufwand erzielen.

Bei Bedarf können die Umfangsflächen der Panzerungsplatten und/oder Panzerungsplattenverbunde vor Anbringen auf dem Träger geschliffen werden, um die herstellungsbedingten Toleranzen der Kantenlängen auszugleichen.

Die Klebstoffschicht dient als mechanische Dämpfung zwischen den Panzerungsplatten bzw. den Panzerungsplattenverbunden und dem Träger, was die Schutzwirkung erhöht. Gleichzeitig ist es möglich, die einzelnen Panzerungsplatten sowie Panzerungsplattenverbunde separat auszutauschen, beispielsweise wenn eine oder einer von ihnen nach einem Beschuss beschädigt ist.

Die Klebstoffschicht ist insbesondere eine dauerelastische Klebstoffschicht.

Die Klebstoffschicht hat vorzugsweise eine Dicke von mindestens 3,0 mm und insbesondere eine Dicke im Bereich 3,0 bis 3,5 mm. Eine dickere Klebstoffschicht erhöht dabei die Fähigkeit der Panzerung, bei einem Beschuss Energie zu absorbieren. Gleichzeitig soll jedoch so wenig Klebstoff wie möglich verwendet werden, um Kosten zu sparen und bei Bedarf ein einfaches Austauschen einzelner Panzerungsplatten oder Panzerungsplattenverbunde zu ermöglichen.

Die Klebstoffschicht kann als durchgehende, ebene Schicht auf den Träger aufgetragen werden.

Die Klebstoffschicht hat gemäß einer Variante, in einem Schnitt betrachtet, ein wellenförmiges Profil, wobei zwischen benachbarten Wellenbergen Luft eingeschlossen ist. Dies erhöht das Federungsvermögen der Klebstoffschicht. Die Luft kann sich auf der Seite der Panzerungsplatten und/oder der Panzerungsplattenverbunde befinden. Anders ausgedrückt wird die Klebstoffschicht auf den Träger aufgebracht, wobei dann die Panzerungsplatten und/oder die Panzerungsplattenverbunde auf die Klebstoffschicht aufgebracht werden. Eine solche Ausführungsform kann insbesondere bei Anbringen der Panzerung während der Produktion vorteilhaft sein, während bei einer Reparatur eine ebene Klebstoffschicht als einfache Alternative zur Verfügung steht.

Der Kleber der Klebstoffschicht sollte in einem Temperaturbereich von -50°C bis +80°C eine ausreichende Haftung der mittels der Klebstoffschicht verbundenen Komponenten der Panzerung gewährleisten.

Bei der Klebstoffschicht handelt es sich vorzugsweise um einen Klebstoff auf Silikonbasis. Dieser zeichnet sich durch ein gutes Federungsvermögen bei hoher Klebwirkung und gleichzeitig guter Alterungsbeständigkeit bei Abdeckung eines hohen Temperaturbereichs aus.

Der Klebstoff der Klebstoffschicht sowie der die einzelnen Schichten des Panzerungsplattenverbundes verbindende Klebstoff können sowohl der gleiche als auch unterschiedliche Klebstoffe sein. Die Vorteile und Überlegungen zum Klebstoff der Klebstoffschicht gelten dabei in analoger Weise für den die einzelnen Schichten des Panzerungsplattenverbundes verbindenden Klebstoff.

Ebenso kann die Dicke der Klebstoffschicht zwischen dem Träger und der Panzerungsschicht zwischen den einzelnen Schichten des Panzerungsplattenverbunds unterschiedlich oder gleich dick sein.

Alternativ kann die Klebstoffschicht statt mit einem Kleber auch mittels eines Hartlots realisiert werden. Auch kann eine mechanische Befestigung der Panzerungsschicht auf dem Träger erfolgen.

Der Träger besteht vorzugsweise aus einem Material mit dem der Träger seinerseits schon eine gewisse Schutzwirkung bereitstellt. Der Träger kann aus einem Material zusammengesetzt sein ausgewählt aus der Gruppe hochfester Stahl, Aluminium, Aluminiumlegierungen, Titan, Titanlegierungen, Kunstfaserverbundwerkstoffen und/oder Kombinationen davon.

Als hochfester Stahl kann insbesondere Panzerstahl genutzt werden. Ein geeigneter Kunstfaserverbundwerkstoff ist insbesondere Kevlar.

In einer Ausführungsform ist auf der der Klebstoffschicht entgegengesetzten Seite der Panzerungsschicht ein Splitterschutz aufgebracht. Dieser verhindert ein übermäßiges Abplatzen von Material der Panzerungsschicht bei Beschuss.

Der Splitterschutz kann direkt auf die Panzerungsschicht aufgeklebt werden.

Der Splitterschutz kann aus Stahl, hochfestem Stahl, Titan, Titanlegierungen, Aluminium, Aluminiumlegierungen, und/oder Verbundwerkstoffen sein. Als Verbundwerkstoff können insbesondere Materialien auf Kohlenstoff- und/oder Kunststoffbasis genutzt werden.

Ferner kann auf der der Klebstoffschicht entgegengesetzten Seite des Trägers ein Zusatzschutz aufgebracht sein. Dieser dient dazu, kleinere Splitter des Trägers und/oder des Projektils aufzufangen, die bei Beschuss der Panzerung entstehen können.

Als Zusatzschutz können insbesondere Folien und/oder Matten aus Verbundwerkstoffen, insbesondere auf Kohlenstoff- und/oder Kunststoffbasis, genutzt werden.

Der Zusatzschutz kann ebenfalls durch Kleben oder eine mechanische Verbindung am Träger befestigt sein.

In einer weiteren Ausführungsform ist der Träger die Außenseite eines mit der Panzerung versehenen Gegenstands, insbesondere eines Fahrzeugs oder einer mobilen Einheit. Als mobile Einheit wird hier und im Folgenden insbesondere temporäre Infrastruktur bezeichnet, beispielsweise ein Container. Das Fahrzeug kann auch ein Flugzeug, ein Helikopter oder ein Schiff sein.

Somit ist es möglich, dass eine erfindungsgemäße Panzerung direkt auf der Außenseite eines bereits vorhandenen Gegenstands - auch nachträglich - aufgebracht wird. Somit eignet sich die vorliegende Erfindung auch dazu, auf einfache Weise eine zusätzliche Panzerung zu realisieren.

In einer weiteren Ausführungsform können zwischen dem Träger und der Außenseite des mit der Panzerung versehenen Gegenstands, insbesondere eines Fahrzeugs oder einer mobilen Einheit, Distanzhalter angebracht sein, die den Träger mit der Außenseite des Gegenstands verbinden.

Dadurch wird es möglich, die erfindungsgemäße Panzerung auch auf Gegenständen anzubringen, deren Außenflächen keine direkte Anbringung der Panzerung ermöglichen. Durch den Abstand des Trägers zur Außenseite des Gegenstands steht zudem zusätzlicher Platz zur Verfügung, um kleinere Splitter des Trägers und/oder des Projektils abzufangen, sodass diese nicht die Außenschicht des Gegenstands beschädigen können.

Weitere Merkmale und Vorteile der Erfindung ergeben sich aus der nachfolgenden Beschreibung beispielhafter Ausführungsformen, aus den Beispielen sowie aus den Zeichnungen. In diesen zeigen:
- Fig. 1 in einer perspektivischen, schematischen Ansicht eine erfindungsgemäße Panzerungsplatte;
- Fig. 2 in einem Querschnitt eine erfindungsgemäße Panzerung mit einem Träger, auf den mehrere Panzerungsplatten gemäß Fig. 1 mittels einer Klebstoffschicht aufgeklebt sind;
- Fig. 3a bis 3c perspektivische Ansichten verschiedener Geometrien der Panzerungsplatte nach Fig. 1;
- Fig. 4 in einem Querschnitt eine erfindungsgemäße Panzerung mit einem Träger, auf den mehrere erfindungsgemäße Panzerungsplattenverbunde umfassend die Panzerungsplatte nach Fig. 1 mittels einer Klebstoffschicht aufgeklebt sind;
- Fig. 5 in einem Querschnitt eine alternative Ausführungsform der Panzerung aus Fig. 2 mit einem Splitterschutz und einem Zusatzschutz;
- Fig. 6 einen Querschnitt durch eine weitere alternative Ausführungsform der Panzerung aus Fig. 2;
- Fig. 7 einen Querschnitt durch noch eine alternative Ausführungsform der Panzerung aus Fig. 2 mit Distanzhaltern;
- Fig. 8 ein schematischer Querschnitt eines Versuchsaufbaus für einen Beschusstest der Panzerungsplatte nach Fig. 1;
- Fig. 9 eine schematische Frontansicht des Versuchsaufbaus aus Fig. 8;
- Fig. 10 ein schematischer Querschnitt eines alternativen Versuchsaufbaus für einen Beschusstest der Panzerungsplatte nach Fig. 1; und
- Fig. 11 bis 18 REM-Aufnahmen erfindungsgemäßer Panzerungsplatten nach Fig. 1.

Für gleiche Bauteile und Komponenten werden in allen Figuren dieselben Bezugszeichen verwendet und die entsprechenden Vorteile und Eigenschaften, welche in Bezug auf eine Ausführungsform aufgeführt sind, gelten für die Bauteile mit gleichem Bezugszeichen in verschiedenen Ausführungsformen in analoger Weise.

### Aufbau und Gestalt von Panzerungsplatten, Panzerungsplattenverbünden und Panzerungen

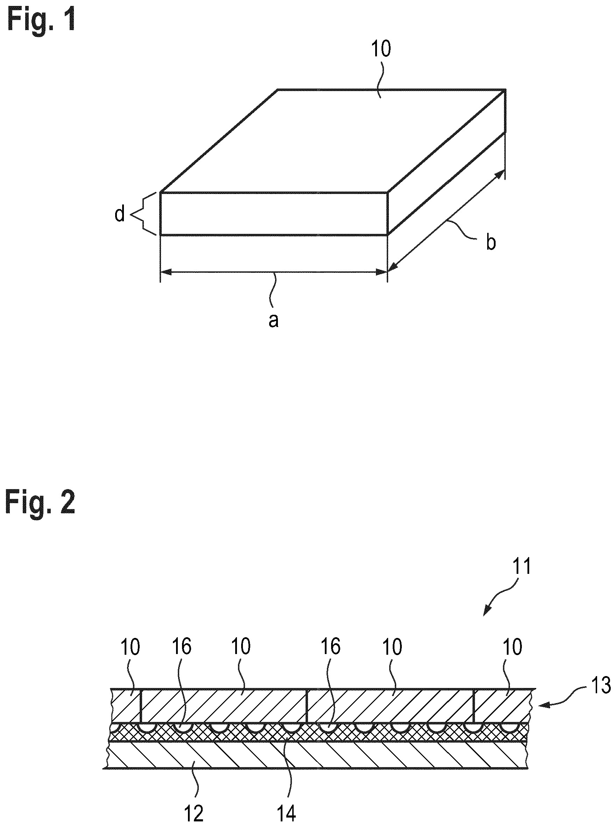

In Fig. 1 ist schematisch eine erfindungsgemäße Panzerungsplatte 10 gezeigt, die im gezeigten Ausführungsbeispiel rechteckig ist und eine konstante Dicke d aufweist.

Die Dicke d beträgt mehrere Millimeter und hängt von der gewünschten Schutzwirkung ab. Vorzugsweise hat die Panzerungsplatte eine Dicke von 3,0 mm oder mehr.

In jedem Fall ist die Dicke der Panzerungsplatte 10 so gewählt, dass die Platte als solche eigenstabil ist und lediglich bei Beschuss zerstört wird.

Die Abmessungen der Panzerungsplatte 10 sind vergleichsweise gering. Die Kantenlängen a und b liegen beispielsweise in der Größenordnung von 10 mm bis 150 mm und vorzugsweise im Bereich von 20 bis 50 mm. Es versteht sich, dass die genauen Abmessungen für den angedachten Einsatzort vom Fachmann bedarfsgerecht gewählt werden können.

Die Panzerungsplatte 10 ist ein massives Teil aus einem Material, umfassend ein Cermet, wobei die Panzerungsplatte 10 eine Dichte im Bereich von 5,0 bis 6,5 g/cm³ aufweist.

Zur Herstellung der Panzerungsplatte 10 können die im Stand der Technik üblichen Sinterverfahren verwendet werden, die für diese Werkstoffe allgemein bekannt sind.

In Fig. 2 ist der Aufbau einer erfindungsgemäßen Panzerung 11 gezeigt, die mehrere der in Fig. 1 gezeigten Panzerungsplatten 10 enthält.

Die in Fig. 2 gezeigte Panzerung 11 verwendet einen Träger 12, auf den die Panzerungsplatten 10 aneinander angrenzend aufgeklebt sind. Die Panzerungsplatten 10 bilden entsprechend eine Panzerungsschicht 13 der Panzerung 11.

Der Träger 12 besteht in der gezeigten Ausführungsform aus einer Stahllegierung, insbesondere einer hochfesten Stahllegierung, wie sie im Bereich der Panzerung von Fahrzeugen verwendet wird, beispielsweise Panzerstahl.

Grundsätzlich eignen sich jedoch neben hochfestem Stahl eine Vielzahl weiterer Materialien für den Träger 12, beispielsweise Aluminium, Aluminiumlegierungen, Titan, Titanlegierungen, Kunstfaserverbundwerkstoffe und/oder Kombinationen davon.

Auf den Träger 12 sind die Panzerungsplatten 10 mittels einer ersten Klebstoffschicht 14 aufgeklebt. Der die erste Klebstoffschicht 14 bildende Klebstoff ist ein silikonbasierter Klebstoff.

Grundsätzlich ist es denkbar, eine Klebstoffschicht mit einer konstanten Dicke zu verwenden, sodass eine durchgehende, ebene Klebstoffschicht 14 auf den Träger 12 aufgebracht wird.

In der Ausführungsform in Fig. 2 ist eine alternative Form der Klebstoffschicht 14 gezeigt, bei der diese, in einem Querschnitt betrachtet, ein allgemein wellenförmiges Profil aufweist. Dadurch stehen die Panzerungsplatten 10 lediglich mit den (abgeplatteten) Wellenbergen der ersten Klebstoffschicht 14 in Kontakt. Zwischen den einzelnen Wellenbergen sind "Kanäle" 16 gebildet, die jeweils mit Luft gefüllt sind.

Eine solche Klebstoffschicht 14 ist jedoch aufwendiger herzustellen, sodass sich diese Ausführungsform vor allem in der Erstherstellung der Panzerung 11 eignet. Muss die Panzerung 11 hingegen lediglich repariert werden oder soll das Herstellungsverfahren weiter vereinfacht werden, kann auch eine ebene Klebstoffschicht 14 verwendet werden.

Der besondere Vorteil der in Fig. 2 gezeigten Panzerung 11 besteht darin, dass die einzelnen Panzerungsplatten 10 auf einfache Weise separat ausgetauscht werden können, falls dies notwendig ist. Die erste Klebstoffschicht 14 gewährleistet eine mechanische Dämpfung zwischen den Panzerungsplatten 10 und dem darunterliegenden Träger 12, was die Schutzwirkung erhöht.

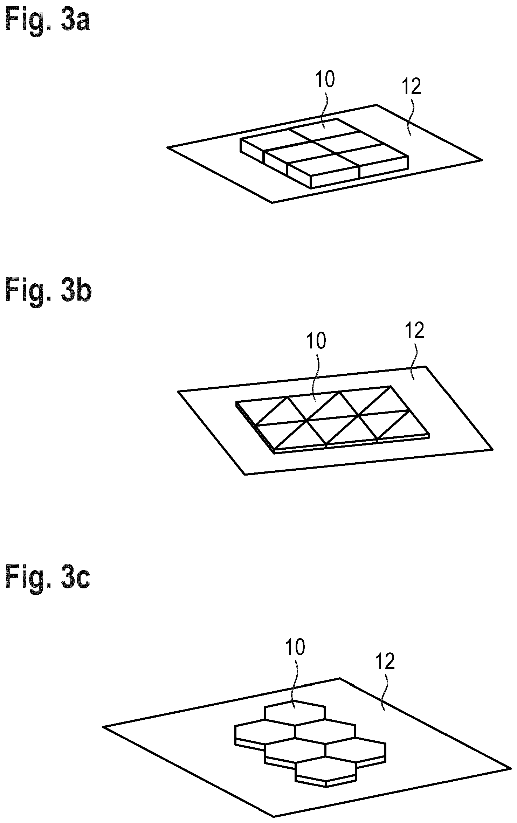

Abweichend von der rechteckigen Form der Panzerungsplatten 10 kann grundsätzlich jede Form verwendet werden, die geeignet ist, um mit mehreren nebeneinander angeordneten Panzerungsplatten eine darunterliegende Fläche vollständig (abgesehen von den Fugen zwischen benachbarten Panzerungsplatten 10) abzudecken. So sind in den Figuren 3a bis 3c verschiedene Geometrien der Panzerungsplatten 10 gezeigt. Beispielsweise können die Panzerungsplatten 10 quadratisch bzw. rechteckig (Fig. 1 und Fig. 3a), dreieckig (Fig. 3b) oder hexagonal (Fig. 3c) sein.

Die Fugen zwischen benachbarten Panzerungsplatten 10 sollten eine Breite in einem Bereich von 0,01 bis maximal 0,08 mm aufweisen, um eine ausreichend gute Schutzwirkung der Panzerung 11 zu gewährleisten. Bei Bedarf können die einzelnen Panzerungsplatten 10 nach dem Herstellungsprozess auf die gewünschte Größe zurecht geschliffen werden, um herstellungsbedingte Toleranzen zu eliminieren und ausreichend kleine Fugen zu gewährleisten.

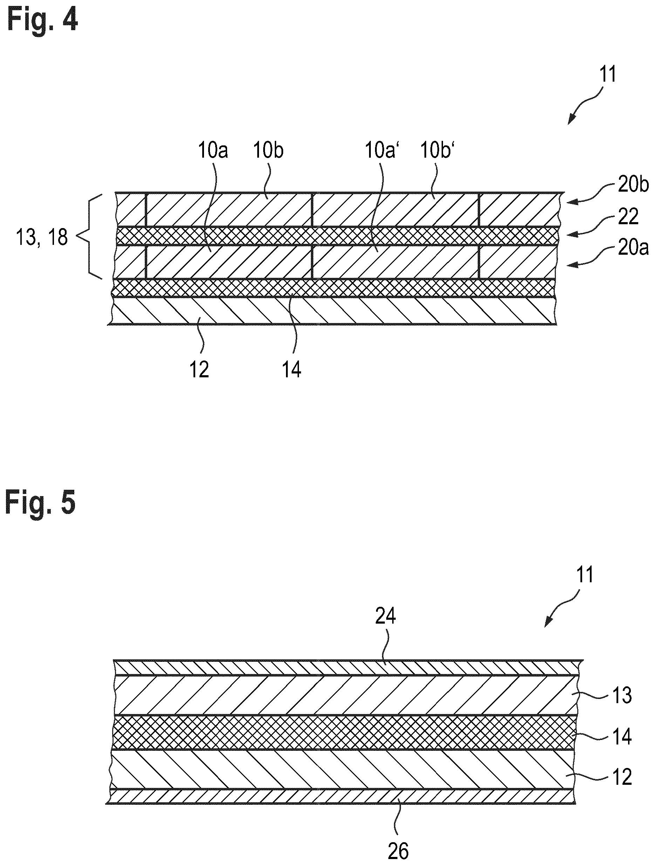

In Fig. 4 ist eine weitere Ausführungsform der Panzerung 11 gezeigt, die einen Panzerungsplattenverbund 18 aufweist, der die Panzerungsschicht 13 bildet.

Der Panzerungsplattenverbund 18 ist auf den Träger 12 mittels der ersten Klebstoffschicht 14 aufgeklebt. Die erste Klebstoffschicht 14 ist mit einer konstanten Dicke ausgeführt.

Der Panzerungsplattenverbund 18 weist mehrere Schichten 20a und 20b auf, die mittels einer zweiten Klebstoffschicht 22 miteinander verbunden sind ("Sandwich-Bauweise"). In diesem Fall bildet der gesamte Panzerungsplattenverbund 18 die Panzerungsschicht 13 der Panzerung 11.

Jede der Schichten 20a und 20b umfasst mehrere Panzerungsplatten 10a und 10b, wobei sich das Material aus dem die Panzerungsplatten 10a und 10b bestehen zwischen den Schichten 20a und 20b unterscheiden kann.

Beispielsweise können die Panzerungsplatten 10a und 10b Cermets unterschiedlicher Zusammensetzung umfassen oder aus diesen bestehen.

Zudem können sich auch die Panzerungsplatten innerhalb einer oder jeder der Schichten 20a und 20b unterscheiden, sodass beispielsweise verschiedene Panzerungsplatten 10a und 10a' bzw. 10b und 10b' verwendet werden.

Somit kann über die Auswahl der Materialien der Panzerungsplatten 10a und 10b ein optimaler Kompromiss zwischen Schutzwirkung, Kosten und Gewicht der Panzerung 11 getroffen werden.

In dieser Ausführungsform sind insgesamt zwei Schichten 20a und 20b aus Panzerungsplatten 10a und 10b vorhanden. Es können jedoch auch mehr als zwei Schichten den Panzerungsplattenverbund 18 bilden. Jedoch ist es vorteilhaft, so wenige Schichten wie möglich zum Erreichen der gewünschten Schutzwirkung zu nutzen, und insbesondere lediglich eine Schicht wie in Fig. 1 gezeigt, um das Gewicht der Panzerung 11 so gering wie möglich zu halten.

Das mögliche maximal verwendbare Gesamtgewicht der Panzerung 11 wird dabei üblicherweise durch den Gegenstand bestimmt, der mit der Panzerung 11 versehen werden soll.

Die einzelnen Panzerungsplatten 10a und 10b können im Vergleich zu der in Fig. 2 gezeigten Ausführungsform eine geringere Dicke aufweisen, sodass der Panzerungsplattenverbund 18 insgesamt eine Dicke analog zur Dicke der Panzerungsschicht 13 aus Fig. 1 aufweist.

Die erste Klebstoffschicht 14 und die zweite Klebstoffschicht 22 können den gleichen oder unterschiedliche Klebstoffe verwenden. Auch kann die zweite Klebstoffschicht ebenso wie die erste Klebstoffschicht 14 "Kanäle" 16 aufweisen oder wie in Fig. 4 gezeigt eine konstante Dicke besitzen. Die zweite Klebstoffschicht 22 gewährleistet eine mechanische Dämpfung zwischen den Panzerungsplatten 10a und 10b bzw. 10a' und 10b'.

Analog zur ersten Klebstoffschicht 14 können die Schichten 20a und 20b statt durch die zweite Klebstoffschicht 22 auch mittels Sintern, Verschrauben oder Löten, insbesondere Hartlöten, miteinander verbunden sein.

In der in Fig. 4 gezeigten Ausführungsform sind die Schichten 20a und 20b des Panzerungsplattenverbundes 18 so übereinander angeordnet, dass die Panzerungsplatten 10a und 10b der Schichten 20a und 20b in einem Querschnitt betrachtet so übereinander angeordnet sind, dass die Panzerungsplatten 10a und 10b deckungsgleich übereinanderliegen, sodass auch die Fugen zwischen den Panzerungsplatten 10a und 10b übereinanderliegen. Es hat sich gezeigt, dass bei ausreichend geringer Fugenbreite auch in diesem Fall keine Beeinträchtigung der Schutzwirkung der Panzerung 11 zu erwarten ist. Mit einer solchen Anordnung ist es besonders einfach, einzelne Panzerungsplatten 10a und 10b sowie ganze Panzerungsplattenverbunde 18 auszutauschen, beispielsweise nach einer Beschädigung der Panzerung 11.

Alternativ können die Panzerungsplatten 10a und 10b auch versetzt zueinander angeordnet sein, sodass die Fugen zwischen den einzelnen Panzerungsplatten 10a und 10b nicht genau übereinanderliegen. Auch wenn die Schutzwirkung der Panzerung 11 auf diese Weise theoretisch weiter erhöht werden kann, insbesondere in Bezug auf einen Fall mehrmaligen Beschusses auf die gleiche Stelle der Panzerung 11, steigt jedoch in einer solchen Ausführungsform der Aufwand für eine Reparatur.

Entsprechend muss eine Abwägung zwischen Herstellungskosten, Stabilität der Panzerung sowie dem Aufwand im Reparaturfall getroffen werden.

In Fig. 5 ist eine weitere Ausführungsform der Panzerung 11 gezeigt, in welcher auf der der Klebstoffschicht 14 entgegengesetzten Seite der Panzerungsschicht 13 ein Splitterschutz 24 aufgebracht, insbesondere aufgeklebt, ist.

Die Panzerungsschicht 13 kann analog zu den zuvor gezeigten Ausführungsformen aus einzelnen Panzerungsplatten 10 oder aus Panzerungsplattenverbunden 18 aufgebaut sein.

Der Splitterschutz 24 ist beispielsweise aus Stahl, hochfestem Stahl, Titan, Titanlegierungen, Aluminium, Aluminiumlegierungen, Verbundwerkstoffen, insbesondere auf Kohlenstoff- und/oder Kunststoffbasis, und/oder Kombinationen davon.

Der Splitterschutz 24 weist im Allgemeinen eine geringere Dicke auf als die Panzerungsschicht 13.

Trifft beispielsweise ein Projektil auf die Panzerung 11 auf, können die Panzerungsplatten 10 der Panzerungsschicht 13 aufgrund des Aufpralls zersplittern. Der Splitterschutz 24 sorgt dafür, dass diese Splitter nicht von der Oberfläche der Panzerung 11 in größerem Maße abplatzen können. Es hat sich gezeigt, dass dadurch die Stabilität der Panzerungsschicht 13 insgesamt und somit die Schutzwirkung der Panzerung 11 weiter erhöht werden kann.

Ferner weist die in Fig. 5 dargestellte Panzerung 11 auf der der Klebstoffschicht 14 entgegengesetzten Seite des Trägers 12 einen Zusatzschutz 26 auf. Der Zusatzschutz 26 ist insbesondere an den Träger 12 geklebt und/oder mechanisch befestigt.

Als Zusatzschutz können insbesondere Folien und/oder Matten aus Verbundwerkstoffen, insbesondere auf Kohlenstoff- und/oder Kunststoffbasis, genutzt werden.

Der Zusatzschutz 26 dient dazu, kleinere Splitter des Trägers 12 und/oder des Projektils aufzufangen, die bei Beschuss der Panzerung entstehen können.

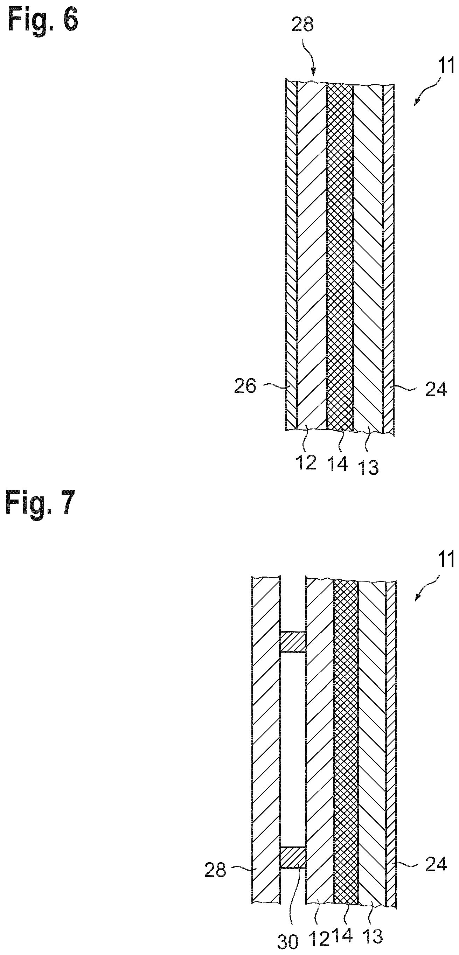

In Fig. 6 ist eine weitere Ausführungsform der Panzerung 11 gezeigt, die analog zu Fig. 5 den Splitterschutz 24 sowie den Zusatzschutz 26 aufweist. In der in Fig. 6 gezeigten Ausführungsform ist der Träger 12 jedoch die Außenseite 28 eines mit der Panzerung 11 versehenen Gegenstands, sodass ein Teil des Gegenstands selbst auch Teil der Panzerung 11 ist.

Beispielsweise ist der Gegenstand ein Fahrzeug oder eine mobile Einheit. Unter einer mobilen Einheit wird hier insbesondere temporäre Infrastruktur verstanden, beispielsweise ein Container.

Somit kann eine bereits bestehende Schutzwirkung des Gegenstands, beispielsweise die gepanzerte Außenschicht eines Fahrzeugs, ausgenutzt und lediglich über die weiteren Bestandteile der Panzerung 11 in ihrer Schutzwirkung ergänzt werden. Damit ist auch eine Nachrüstung bereits bestehender Gegenstände mit der Panzerung 11 auf einfache Weise möglich.

Der Zusatzschutz 26 ist insbesondere in einer Ausführungsform gemäß Fig. 6 von Vorteil, beispielsweise, wenn sich ein Insasse eines gepanzerten Fahrzeugs direkt hinter dem Träger 12 befindet. Selbst wenn das Projektil, das beispielsweise bei Beschuss auf die Panzerung 11 auftrifft, diese nicht durchschlagen kann, könnten vom Träger 12 Splitter in Richtung des Insassen abplatzen und diesen verletzen. Dies wird durch den Zusatzschutz 26 effektiv verhindert.

Da die Panzerungsschicht 13 sowie der Träger 12 den Großteil der Wucht des Einschlages aufnehmen, weisen die in Richtung des Insassen absplitternden Teile des Trägers 12 kaum noch Durchschlagskraft auf, sodass eine dünne Folie und/oder Matte als Zusatzschutz 26 ausreichend ist.

In Fig. 7 ist noch eine weitere Ausführungsform der Panzerung 11 gezeigt, wobei die Panzerung 11 mittels Abstandshaltern 30 an der Außenseite 28 eines Gegenstands befestigt ist, insbesondere an der Außenseite eines Fahrzeugs oder einer mobilen Einheit.

Eine solche Ausführungsform eignet sich insbesondere in dem Fall, dass der Träger 12, die Panzerungsschicht 13 und/oder die Klebstoffschicht 14 nicht direkt auf der Außenseite 28 angebracht werden können oder die Außenseite 28 nicht selbst aus einem ausreichend stabilen Material besteht, sodass eine Ausführungsform gemäß Fig. 6 nicht realisiert werden kann.

Die Abstandshalter 30 sorgen zusätzlich dafür, dass beispielsweise Splitter oder Abplatzungen des Trägers 12 bei Beschuss der Panzerung 11 nicht direkt auf die Außenseite 28 auftreffen. Entsprechend ist in der Ausführungsform nach Fig. 7 kein Zusatzschutz 26 vorgesehen.

Zusätzlich ist über die Abstandshalter 30 ein einfaches Austauschen der Panzerung 11 bei Beschädigung möglich, da diese lediglich von den Abstandshaltern 30 gelöst und eine neue Panzerung 11 an der beschädigten Stelle montiert werden muss.

### Beschussversuche 1

In Tabelle 1 sind Zusammensetzungen beispielhaft getesteter Panzerungsplatten und in Tabelle 2 deren physikalische und mechanische Eigenschaften angegeben.

**Tabelle 1: Zusammensetzungen des Materials der Panzerungsplatten; alle Gehaltsangaben bezogen auf das Gesamtgewicht des Materials.**

| Probe | TiC | TiCN | WC | Mo₂C | Co | Ni | Fe |
|---|---|---|---|---|---|---|---|
| A | 71,00 | - | - | 9,00 | - | 20,00 | - |
| B | 77,50 | - | - | 9,00 | - | 13,50 | - |
| C | 81,00 | - | - | 9,00 | - | 10,00 | - |
| D | 85,00 | - | - | 9,00 | - | 6,00 | - |
| E | 88,00 | - | - | 9,00 | - | 3,00 | - |
| F | 33,50 | 33,50 | 11,00 | 9,50 | 8,30 | 4,20 | - |
| G | 81,00 | - | - | 9,00 | - | 7,50 | 2,50 |

**Tabelle 2: Eigenschaften der Panzerungsplatten**

| Probe | Dichte in g/cm³ | Druckfestigkeit in MPa | Härte nach Vickers HV30 | Bruchzähigkeit K_{1c} in MNm^{-3/2} | Biegebruchfestigkeit in MPa |
|---|---|---|---|---|---|
| A | 5,80 | n.b. | 1380 | 10,4 | 1650 |
| B | 5,60 | n.b. | 1570 | 8,4 | 1700 |
| C | 5,50 | n.b. | 1680 | 8,0 | 1600 |
| D | 5,40 | n.b. | 1770 | 7,0 | 1350 |
| E | 5,30 | 4680 | 1850 | 6,7 | 1100 |
| F | 6,10 | 5640 | 1690 | 8,5 | 1900 |
| G | 5,50 | n.b. | 1680 | 7,1 | 1380 |
| | | | | | |
| H* (SiC) | 3,15 | 3500 | 2200 - 2500 | 3,2 | 400 |

| | | | | | |
|---|---|---|---|---|---|
| n.b.: nicht bestimmt *: Literaturangaben | | | | | |

Aus den Tabellen 1 und 2 ist zu erkennen, dass bei Zunahme des Anteils an titanbasiertem Hartstoff die Dichte reduziert, die Härte gesteigert, die Bruchzähigkeit erniedrigt und die Biegebruchfestigkeit verkleinert werden kann. Somit ist über die Wahl der Anteile an titanbasiertem Hartstoff ein maßgeschneidertes Eigenschaftsprofil der erfindungsgemäßen Panzerungsplatte erzielbar.

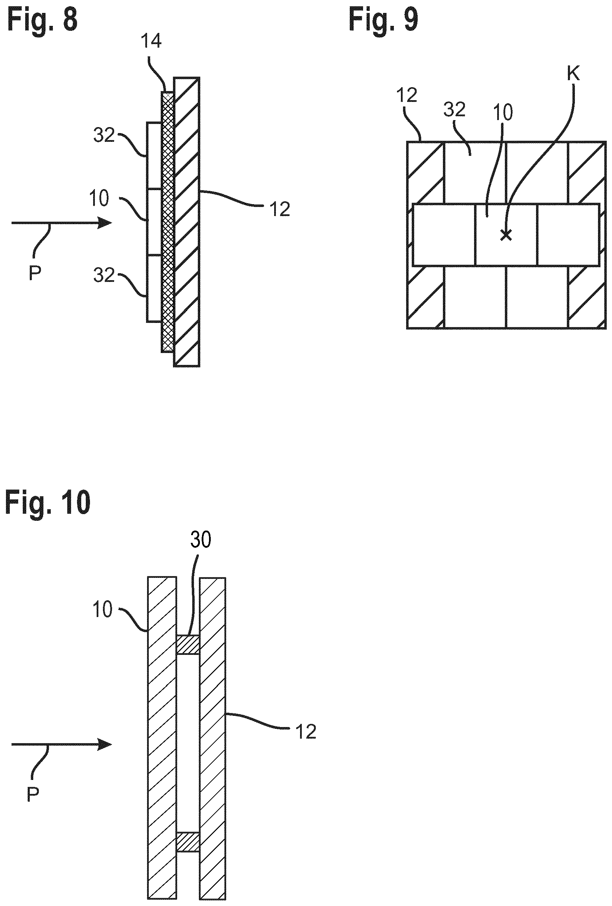

Fig. 8 und 9 zeigen schematisch einen Querschnitt eines ersten Versuchsaufbaus zum Testen des Verhaltens der erfindungsgemäßen Panzerungsplatten bei Beschuss.

Im ersten Versuchsaufbau wurde die jeweils zu testende Panzerungsplatte 10 mittels einer 3 mm dicken Klebstoffschicht auf einen Träger befestigt, wobei als Träger eine 8,5 mm dicke Platte aus Panzerstahl Armox^{®} 500T verwendet wurde.

Angrenzend an die zu testende Panzerungsplatte 10 wurden umlaufend Stützplatten 32 auf den Träger aufgebracht. Als Stützplatten 32 wurden Panzerungsplatten der gleichen Größe verwendet wie die zu testende Panzerungsplatte 10.

Als Stützplatten 32 kamen Platten mit folgender Zusammensetzung zum Einsatz: 63 Gewichtsprozent TiCN, insgesamt 25 Gewichtsprozent an WC, Mo₂C, TaC und NbC sowie 8 Gewichtsprozent Co und 4 Gewichtsprozent Nickel. Die Stützplatten wiesen eine Dichte von 6,45 g/cm³ sowie eine Härte nach Vickers (HV30) von 1650 auf.

Die getesteten Panzerungsplatten wiesen eine Kantenlänge von 22,8 mm auf.

Die zu testende Panzerungsplatte 10 wurde mittig mit einer Patrone vom Kaliber 7,62 x 51 AP8 beschossen, wobei eine Zielgeschwindigkeit von 930 m/s verwendet wurde.

In Fig. 8 ist die Beschussrichtung mittels des Pfeils B und in Fig. 9 der Einschlagort mittels des Kreuzes K angedeutet.

In Tabelle 3 sind die Ergebnisse der Beschussversuche für verschiedene Dicken der Panzerplatten angegeben.

**Tabelle 3: Ergebnisse der Beschussversuche 1.**

| Probe | Plattendicke in mm | | | | |
|---|---|---|---|---|---|
| | 4,0 | 5,0 | 5,7 | 6 | 7 |
| C | n.b. | Durchschuss | Durchschuss | Gestoppt | Gestoppt |
| E | n.b. | Durchschuss | Gestoppt | Gestoppt | Gestoppt |
| F | Durchschuss | Gestoppt | n.b. | Gestoppt | Gestoppt |
| G | n.b. | Durchschuss | n.b. | Gestoppt | Gestoppt |

| | | | | | |
|---|---|---|---|---|---|
| n.b.: nicht bestimmt | | | | | |

Aus Tabelle 3 ergibt sich, dass sich alle der getesteten Zusammensetzungen als Material für Panzerungsplatten eignen. Es zeigt sich, dass Platten mit höherer Dichte tendenziell dünnere Panzerungsplatten erlauben, welche dem Beschuss standhalten. Daraus folgt, dass im Fall von Panzerungsplatten mit geringerer Dichte weiterhin das resultierende Gesamtgewicht vergleichsweise konstant gehalten werden kann.

### Beschussversuche 2

In Fig. 10 ist schematisch ein Querschnitt eines alternativen Versuchsaufbaus zum Testen des Verhaltens der erfindungsgemäßen Panzerungsplatten bei Beschuss gezeigt.

Im alternativen Versuchsaufbau ist die zu testende Panzerungsplatte 10 als Kompositsystem aus Splitterschutz, Panzerungsplatte, Klebeschicht und Zusatzschutz, auch als "Baking" bezeichnet, über Abstandshalter 30 an einem Träger 12 angebracht, wobei ein Luftspalt von 15 mm Dicke zwischen Kompositsystem und Träger erzeugt wurde.

Als Träger wurde eine 8,5 mm dicke Platte aus Panzerstahl 500 HB eingesetzt.

In Tabelle 4 sind die Ergebnisse der Beschussversuche nach STANAG 4569 gezeigt. Im Fall von Mehrfachbeschuss-Versuchen bezeichnen die angegebenen Zielgeschwindigkeiten die Zielgeschwindigkeiten der nacheinander erfolgten Beschussdurchgänge.

**Tabelle 4: Ergebnisse der Beschussversuche 2**

| Patrone | Art des Beschusses | Zielgeschwindigkeit in m/s | Probe E | Probe F |
|---|---|---|---|---|
| 7,62 x 51 AP | Mehrfachbeschuss | E: 931, 937, 927, 922; | Gestoppt | Gestoppt |
| | | F: 928, 922, 923, 928 | | |
| | Einzelbeschuss | E: 982; F: 993 | Gestoppt | Gestoppt |
| | | E: 873; F: 866 | Gestoppt | Gestoppt |
| | | E: 826; F: 810 | Gestoppt | Gestoppt |
| 7,62 x 54R B32 API Dragunov | Einzelbeschuss | E: 867, 861, 855, 851; | Gestoppt | Gestoppt |
| | | F: 859, 852, 857, 862 | | |
| FSP20 | Einzelbeschuss | F: 799 | n.b. | Gestoppt |
| | | F: 820 | n.b. | Gestoppt |
| | | F: 851 | | Gestoppt |
| | | F: 900 | | Gestoppt |
| | | E: 971; F: 964 | Gestoppt | Gestoppt |
| | | E: 1008; F: 1012 | Gestoppt | Gestoppt |

| | | | | |
|---|---|---|---|---|
| n.b.: nicht bestimmt | | | | |

Die Proben E und F wiesen die gleichen Zusammensetzungen auf wie zuvor für die Beschussversuche 1 erläutert.

Die Panzerungsplatten der Probe E wurden in einer Dicke von 5,2 mm und die Panzerungsplatten der Probe F wurden in einer Dicke von 5,9 mm getestet.

Die getesteten Panzerungsplatten wiesen eine Kantenlänge von 11,5 mm sowie eine hexagonale Form auf.

Aus Tabelle 4 wird ersichtlich, dass die erfindungsgemäßen Panzerungsplatten sowohl bei einem einzelnen Beschuss als auch bei Mehrfachbeschuss nach STANAG 4569 das Geschoss zuverlässig stoppen.

### Oberflächenbehandlung

Panzerungsplatten mit den Zusammensetzungen gemäß Proben E und F wurden zusätzlich mittels Rasterelektronenmikroskopie (REM) untersucht.

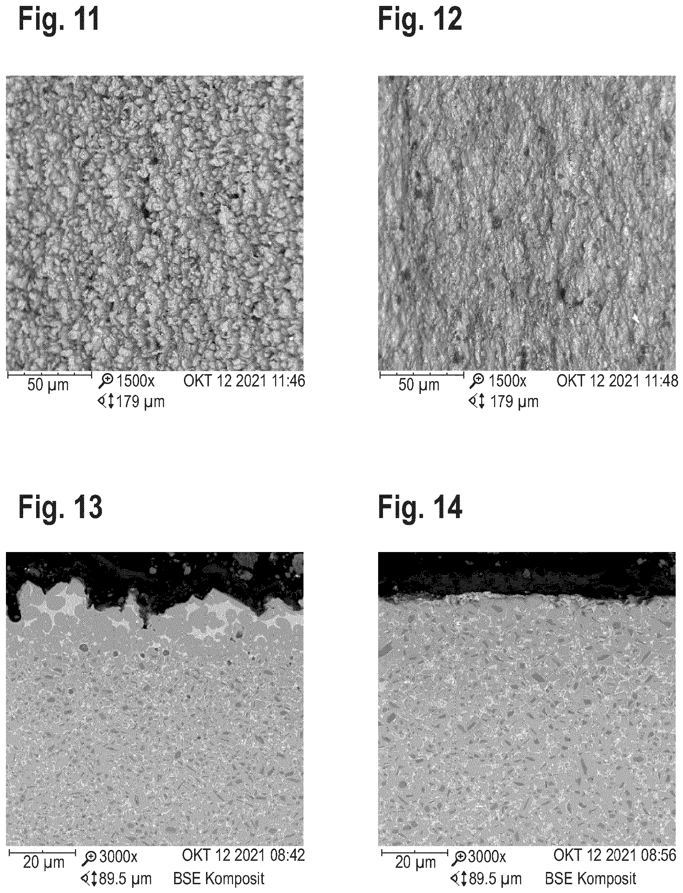

Fig. 11 und Fig. 13 zeigen eine Oberflächenaufnahme und ein Schnittbild auf bzw. durch eine Panzerungsplatte gemäß Probe E. Insbesondere in Fig. 13 ist deutlich zu erkennen, dass sich an der Oberseite der Panzerungsplatte der Binder anreichert (helle Bereiche in der REM-Aufnahme), wodurch sich eine mit Binder verarmte Zone unterhalb dieses Bereichs bildet.

Dieser Effekt wird auf Diffusionseffekte während der Sinterung der Panzerungsplatte zurückgeführt und resultiert in einer Gradientenstruktur der Panzerungsplatte über deren Dicke hinweg, wodurch die Widerstandsfähigkeit der Panzerungsplatte reduziert sein kann.

Um die Widerstandsfähigkeit der Panzerungsplatte weiter zu erhöhen, kann die Oberseite der Panzerungsplatte daher sandgestrahlt werden. In Fig. 12 und 14 sind eine Oberflächenaufnahme und ein Schnittbild auf bzw. durch eine Panzerungsplatte nach Probe E nach dem Sandstrahlen gezeigt.

Das Sandstrahlen erfolgte mit einer Band-Durchlaufstrahlanlage der Fa. Rösler RSKI 1400. Es wurden vier Strahldüsen und ein Strahldruck von 6 bar eingesetzt. Der Abstand zum Werkstück betrug 20 cm und der Vorschub während des Sandstrahlens 0,2 m/min bei einer Gesamtstrahlzeit von einer Minute.

Als Strahlmittel wurde "WR - Normalkorund Braun" der Fa. Werner Rumler Industriebedarf & Strahlmittel GmbH der Kategorie Fepa 80 mit einer Körnung im Bereich von 149 bis 210 µm verwendet.

In Fig. 12 ist zu erkennen, dass nach dem Sandstrahlen eine ebenere Oberflächenstruktur resultiert, deren Rauigkeit über den gewählten Sandstrahlprozess einstellbar ist.

Aus der Schnittansicht in Fig. 14 wird ersichtlich, dass die mit metallischem Binder angereicherte Zone an der Oberseite der Panzerungsplatte beseitigt ist.

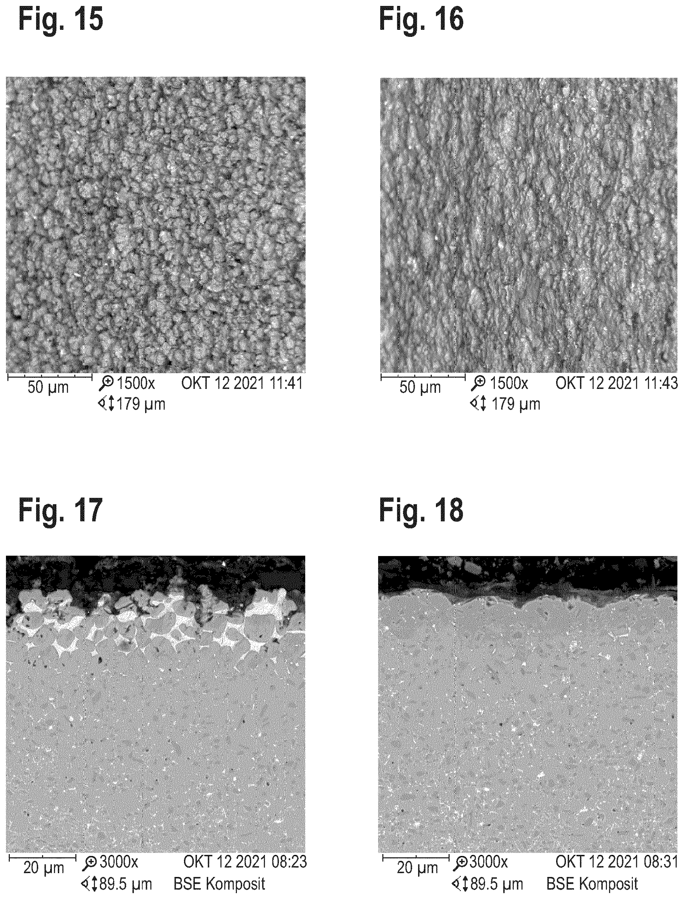

In den Fig. 15 bis 18 sind analoge Aufnahmen für Panzerungsplatten gemäß Probe F dargestellt, wobei die Fig. 15 und 17 eine Oberflächenansicht bzw. eine Schnittansicht vor dem Sandstrahlen und die Fig. 16 und 18 eine Oberflächenansicht bzw. eine Schnittansicht nach dem Sandstrahlen zeigen.

## Patentansprüche

1. Panzerungsplatte (10), bestehend aus einem Material umfassend einen Cermet, wobei die Panzerungsplatte (10) eine Dichte im Bereich von 5,0 bis 6,5 g/cm³ aufweist, wobei der Cermet als Hauptkomponente einen titanbasierten Hartstoff umfasst, der aus der Gruppe TiC, TiCN und Kombinationen davon ausgewählt ist, und wobei das Material der Panzerungsplatte einen Gehalt an titanbasiertem Hartstoff im Bereich von 60 bis 95 Gewichtsprozent aufweist, bezogen auf das Gesamtgewicht des Materials.

2. Panzerungsplatte (10) nach Anspruch 1, wobei der Cermet zusätzlich zum titanbasierten Hartstoff wenigstens einen weiteren Hartstoff umfasst, der ausgewählt ist aus den Carbiden von Wolfram, Molybdän und Mischungen davon.

3. Panzerungsplatte (10) nach Anspruch 1 oder 2, wobei der Cermet frei von Carbiden, Nitriden und Carbonitriden von Tantal und/oder Niob ist.

4. Panzerungsplatte (10) nach einem der vorhergehenden Ansprüche, wobei der Cermet einen Binder umfasst, und wobei der Binder zusammengesetzt ist aus den Elementen ausgewählt aus der Gruppe Kobalt, Nickel, Kupfer, Eisen und Mischungen davon, bevorzugt ausgewählt aus der Gruppe Kobalt, Nickel und Mischungen davon, besonders bevorzugt wobei der Binder Nickel ist.

5. Panzerungsplatte (10) nach einem der vorhergehenden Ansprüche, wobei das Material der Panzerungsplatte (10) eine Druckfestigkeit im Bereich von 4400 bis 5800 MPa aufweist, bevorzugt im Bereich von 4600 bis 5700 MPa.

6. Panzerungsplatte (10) nach einem der vorhergehenden Ansprüche, wobei die Panzerungsplatte (10) eine Härte nach Vickers, HV30, im Bereich von 1000 bis 2000 aufweist, bevorzugt im Bereich von 1300 bis 1900.

7. Panzerungsplatte (10) nach einem der vorhergehenden Ansprüche, wobei die Panzerungsplatte (10) eine Bruchzähigkeit nach Palmqvist K_{1c} im Bereich von 6 bis 12 MNm^{-3/2} aufweist, bevorzugt im Bereich von 6,5 bis 10,5 MNm^{-3/2}.

8. Panzerungsplatte (10) nach einem der vorhergehenden Ansprüche, wobei die Panzerungsplatte (10) eine Biegebruchfestigkeit im Bereich von 750 bis 2000 MPa aufweist, bevorzugt im Bereich von 1050 bis 1950 MPa.

9. Panzerungsplatte (10) nach einem der vorhergehenden Ansprüche, wobei die Panzerungsplatte (10) eine Dicke von 3,0 mm oder mehr hat, bevorzugt eine Dicke im Bereich von 3,0 bis 8,0 mm, besonders bevorzugt von 3,5 bis 7,0 mm.

10. Panzerungsplatte (10) nach einem der vorhergehenden Ansprüche, wobei die Panzerungsplatte (10) eine Kantenlänge von 5,0 mm oder mehr aufweist, bevorzugt von 10,0 mm oder mehr.

11. Panzerungsplatte (10) nach einem der vorhergehenden Ansprüche, wobei eine Oberseite der Panzerungsplatte (10) sandgestrahlt ist.

12. Panzerungsplattenverbund (18), umfassend zumindest zwei Schichten aus Panzerungsplatten (10) nach einem der vorhergehenden Ansprüche, die miteinander verbunden sind.

13. Panzerung (11) mit einem Träger (12), einer Panzerungsschicht (13) und einer Klebstoffschicht (14), mittels der die Panzerungsschicht (13) mit dem Träger (12) verbunden ist, wobei die Panzerungsschicht (13) aus mehreren Panzerungsplatten (10) nach einem der Ansprüche 1 bis 11 und/oder aus Panzerungsplattenverbunden (18) nach Anspruch 12 gebildet ist.

14. Panzerung (11) nach Anspruch 13, wobei der Träger (12) die Außenseite eines mit der Panzerung (11) versehenen Gegenstands ist, insbesondere eines Fahrzeugs oder einer mobilen Einheit.

## Claims

1. An armor plate (10) consisting of a material comprising a cermet, wherein the armor plate (10) has a density in the range of 5.0 to 6.5 g/cm³, wherein the cermet comprises as the main component a titanium-based hard material selected from TiC, TiCN and combinations thereof, and wherein the material of the armor plate has a content of titanium-based hard material in the range of 60 to 95 percent by weight of the total weight of the material.

2. The armor plate (10) according to claim 1, wherein, in addition to the titanium-based hard material, the cermet comprises at least one further hard material selected from the carbides of tungsten, molybdenum and mixtures thereof.

3. The armor plate (10) according to claim 1 or 2, wherein the cermet is free of carbides, nitrides and carbonitrides of tantalum and/or niobium.

4. The armor plate (10) according to any of the preceding claims, wherein the cermet comprises a binder, and wherein the binder is composed of the elements selected from the group cobalt, nickel, copper, iron and mixtures thereof, preferably selected from the group cobalt, nickel and mixtures thereof, wherein the binder is particularly preferably nickel.

5. The armor plate (10) according to any of the preceding claims, wherein the material of the armor plate (10) has a compressive strength in the range of 4,400 to 5,800 MPa, preferably in the range of 4,600 to 5,700 MPa.

6. The armor plate (10) according to any of the preceding claims, wherein the armor plate (10) has a Vickers hardness HV30 in the range of 1,000 to 2,000, preferably in the range of 1,300 to 1,900.

7. The armor plate (10) according to any of the preceding claims, wherein the armor plate (10) has a Palmqvist K_{1c} fracture toughness in the range of 6 to 12 MNm^{-3/2}, preferably in the range of 6.5 to 10.5 MNm^{-3/2}.

8. The armor plate (10) according to any of the preceding claims, wherein the armor plate (10) has a bending strength in the range of 750 to 2,000 MPa, preferably in the range of 1,050 to 1,950 MPa.

9. The armor plate (10) according to any of the preceding claims, wherein the armor plate (10) has a thickness of 3.0 mm or more, preferably a thickness in the range of 3.0 to 8.0 mm, particularly preferably of 3.5 to 7.0 mm.

10. The armor plate (10) according to any of the preceding claims, wherein the armor plate (10) has an edge length of 5.0 mm or more, preferably of 10.0 mm or more.

11. The armor plate (10) according to any of the preceding claims, wherein a top side of the armor plate (10) is sandblasted.

12. An armor plate composite (18) comprising at least two layers of armor plates (10) according to any of the preceding claims, which are connected to one another.

13. An armor (11) having a carrier (12), an armor layer (13) and an adhesive layer (14), by means of which the armor layer (13) is connected to the carrier (12), wherein the armor layer (13) consists of a plurality of armor plates (10) according to any of claims 1 to 11 and/or armor plate composites (18) according to claim 12.

14. The armor (11) according to claim 13, wherein the carrier (12) is the outer side of an object equipped with the armor (11), in particular a vehicle or a mobile unit.

## Revendications

1. Plaque de blindage (10) constituée d'un matériau comprenant un cermet, dans laquelle la plaque de blindage (10) a une masse volumique dans la plage de 5,0 à 6,5 g/cm³, dans laquelle le cermet comprend en tant que composant principal un matériau dur à base de titane choisi parmi TiC, TiCN et des combinaisons de ceux-ci, et dans laquelle le matériau de la plaque de blindage a une teneur en matériau dur à base de titane dans la plage de 60 à 95 pour cent en poids du poids total du matériau.

2. Plaque de blindage (10) selon la revendication 1, dans laquelle, en plus du matériau dur à base de titane, le cermet comprend au moins un autre matériau dur choisi parmi les carbures de tungstène, de molybdène et des mélanges de ceux-ci.

3. Plaque de blindage (10) selon la revendication 1 ou 2, dans laquelle le cermet est exempt de carbures, nitrures et carbonitrures de tantale et/ou de niobium.

4. Plaque de blindage (10) selon l'une quelconque des revendications précédentes, dans laquelle le cermet comprend un liant, et dans laquelle le liant est composé des éléments choisis dans le groupe constitué par le cobalt, le nickel, le cuivre, le fer et des mélanges de ceux-ci, de préférence choisis dans le groupe constitué par le cobalt, le nickel et des mélanges de ceux-ci, dans laquelle le liant est de manière particulièrement préférée le nickel.

5. Plaque de blindage (10) selon l'une quelconque des revendications précédentes, dans laquelle le matériau de la plaque de blindage (10) a une résistance à la compression dans la plage de 4400 à 5800 MPa, de préférence dans la plage de 4600 à 5700 MPa.

6. Plaque de blindage (10) selon l'une quelconque des revendications précédentes, dans laquelle la plaque de blindage (10) a une dureté Vickers HV30 dans la plage de 1000 à 2000, de préférence dans la plage de 1300 à 1900.

7. Plaque de blindage (10) selon l'une quelconque des revendications précédentes, dans laquelle la plaque de blindage (10) a une ténacité à la rupture Palmqvist K_{1c} dans la plage de 6 à 12 MNm^{-3/2}, de préférence dans la plage de 6,5 à 10,5 MNm^{-3/2}.

8. Plaque de blindage (10) selon l'une quelconque des revendications précédentes, dans laquelle la plaque de blindage (10) a une résistance à la flexion dans la plage de 750 à 2000 MPa, de préférence dans la plage de 1050 à 1950 MPa.

9. Plaque de blindage (10) selon l'une quelconque des revendications précédentes, dans laquelle la plaque de blindage (10) a une épaisseur de 3,0 mm ou plus, de préférence une épaisseur dans la plage de 3,0 à 8,0 mm, de manière particulièrement préférée de 3,5 à 7,0 mm.

10. Plaque de blindage (10) selon l'une quelconque des revendications précédentes, dans laquelle la plaque de blindage (10) a une longueur d'arête de 5,0 mm ou plus, de préférence de 10,0 mm ou plus.

11. Plaque de blindage (10) selon l'une quelconque des revendications précédentes, dans laquelle un côté supérieur de la plaque de blindage (10) est sablé.

12. Composite de plaques de blindage (18) comprenant au moins deux couches de plaques de blindage (10) selon l'une quelconque des revendications précédentes, qui sont reliées l'une à l'autre.

13. Blindage (11) ayant un support (12), une couche de blindage (13) et une couche adhésive (14), au moyen de laquelle la couche de blindage (13) est reliée au support (12), dans lequel la couche de blindage (13) est constituée d'une pluralité de plaques de blindage (10) selon l'une quelconque des revendications 1 à 11 et/ou de composites de plaques de blindage (18) selon la revendication 12.

14. Blindage (11) selon la revendication 13, dans lequel le support (12) est le côté extérieur d'un objet équipé du blindage (11), en particulier un véhicule ou une unité mobile.
